# EUROPEAN PATENT SPECIFICATION

(11) **EP 2 594 893 B1**
(45) Date of publication and mention of the grant of the patent: **23.09.2020**
(21) Application number: 11425278.6
(22) Date of filing: 16.11.2011
(51) Int. Cl.: G01B 5/008, G01B 7/008, G01B 11/00, G01B 21/04

(54) **Coordinate gantry measuring machine**
Koordinatenmessmaschine
Machine de mesure de coordonnées

(43) Date of publication of application: 22.05.2013
(73) Proprietor: Hexagon Metrology S.p.A., 10024 Moncalieri (IT)
(72) Inventor: Verdi, Michele, 10098 Rivoli (IT)
(74) Representative: Bergadano, Mirko

(56) References cited:
- EP-A1- 0 393 795
- EP-A1- 2 283 303
- DE-A1- 2 413 335
- IT-B- 1 121 498
- US-A- 5 287 629
- US-A- 6 058 618
- US-A1- 2010 018 153
- Yang Hu: "Investigation and development of an advanced virtual coordinate measuring machine", , 1 January 2010 (2010-01-01), XP055672627, Retrieved from the Internet: URL:http://citeseerx.ist.psu.edu/viewdoc/d ownload?doi=10.1.1.426.2748&rep=rep1&type= pdf [retrieved on 2020-03-02]
- NEUMANN H J: "CNC-Koordinatenmesstechnik", KONTAKT UND STUDIUM, 31 December 1988 (1988-12-31), pages 24-26, 2, XP002160134,

## Description

The present invention relates to a gantry measuring machine, in what follows referred to for brevity as "gantry machine".

Gantry machines are generally used for measuring pieces of large dimensions, such as, for example, parts of aeroplanes.

From a structural standpoint, they are characterized by a pair of horizontal longitudinal members parallel to one another, each carried by a plurality of independent pillars supported by a concrete foundation or a machine bed set above the ground. A mobile carriage extending in a direction transverse to the longitudinal members is supported in the proximity of its own ends by the guides, and is mobile along a first horizontal axis identified by the guides themselves. The carriage in turn defines guides for a slide that is mobile along a second horizontal axis perpendicular to the first axis. Finally, the slide carries a spindle mobile with respect thereto along a third vertical axis, fixed to which in use is a measuring tool.

Gantry machines of the type briefly described present a measuring precision that is not particularly high as compared to other classes of measuring machines. This is due in part to the large dimensions of the machine (the longitudinal members can have a length of several metres), with consequent relatively ample machining tolerances albeit within the limits of the metrological precision required, and in part to the dimensional instability of the foundation, which leads to deformations and relative displacements of the pillars. Since the longitudinal members are constrained to the pillars, deformations are generated on the longitudinal members themselves, which entail effects of pitching and rolling of the cross member in its motion along the first axis and consequent errors of measurement.

On account of the dimensional instability of the foundation and of the modes of constraint of the guides to the pillars, said errors are difficult to compensate.

IT 1 121 489 B discloses an apparatus for determining the position or dimension of objects on machine tools and co-ordinate measuring machines, which detects the position of tools or measuring heads for measuring pieces with respect to fixed reference points or paths located outside the machine by means of length and/or angle measurements.

EP 2 283 303 A1 discloses a bridge co-ordinate measuring machine comprising a machine bed provided with guides along a first axis, and a mobile unit comprising at least one main carriage mobile along the guides; the machine bed comprises a closed perimetral metal frame provided with guides and a worktable housed within the frame; the worktable and the frame are constrained to one another by constraint means that uncouple the deformations thereof.

The aim of the present invention is to provide a gantry machine that will be free from the drawbacks linked to known machines that have been specified above.

The aforesaid aim is achieved by a gantry machine according to Claim 1.

For a better understanding of the present invention, preferred embodiments thereof are described in what follows by way of non-limiting examples (as the full scope of protection of the present invention is only limited by the appended claims), with reference to the attached drawings, wherein:
Figure 1 is a perspective view of a first embodiment of a gantry machine according to the present invention;
Figure 2 is a schematic top plan view of a fixed structure of the machine of Figure 1;
Figure 3 is a schematic top plan view of the fixed structure of the machine of Figure 1, according to a variant embodiment of the present invention;
Figure 4 is a perspective view of a second embodiment of a gantry machine according to the present invention;
Figure 5 is a schematic top plan view of a fixed structure of the machine of Figure 4;
Figure 6 is a perspective view of a third embodiment of a gantry machine according to the present invention; and
Figure 7 is a schematic top plan view of a fixed structure of the machine of Figure 6.

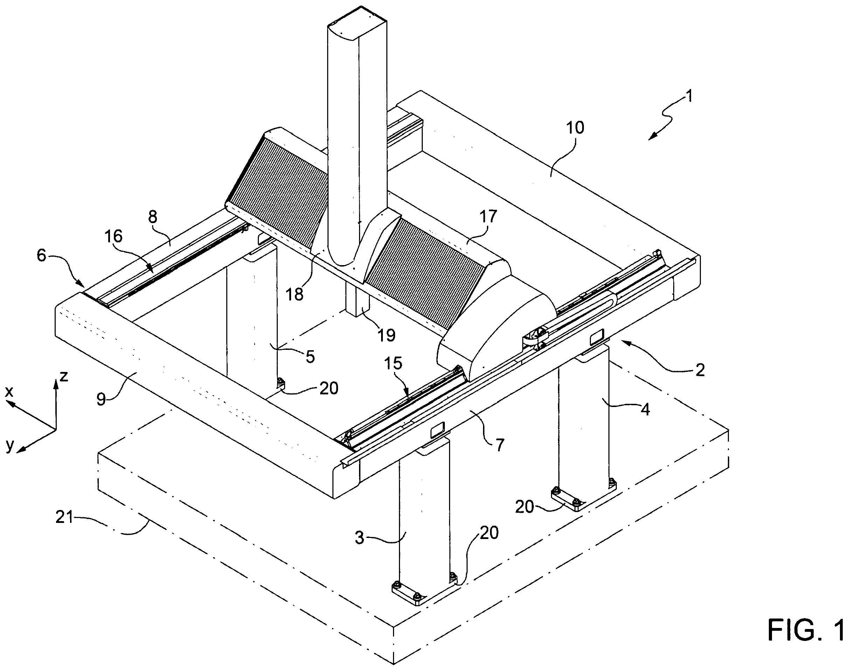

With reference to Figure 1, designated as a whole by 1 is a gantry measuring machine.

The machine 1 comprises a fixed structure 2 defined by three vertical pillars 3, 4, 5 and by a quadrangular top frame 6 supported by the pillars 3, 4, 5.

The frame 6 is constituted by a pair of horizontal longitudinal members 7, 8 parallel to one another, and by a pair of cross members 9, 10 having respective ends fixed head-on to the ends of the longitudinal members 7, 8.

The longitudinal members 7, 8 define respective guides 15, 16 for a carriage 17, which extends in a direction transverse to the longitudinal members 7, 8. The carriage is mobile along the guides 15, 16, in a way in itself known, in a direction parallel to a first axis Y of a triad of co-ordinate axes X, Y, Z.

The machine 1 further comprises a slide 18 carried by the carriage 17 and mobile along the latter in a direction parallel to a second axis X of the triad.

The slide 18 carries a column 19, which is vertically mobile along the axis Z and defines a spindle to which there can be fixed, rigidly or with the interposition of articulated wrists, the measuring tools (not illustrated).

The pillars 3, 4, 5 have respective bases 20 designed to be fixed, in a conventional way, to a concrete foundation block 21, or to a machine bed above the ground made of steel, cast iron, or concrete, or to an industrial floor with pre-defined characteristics.

The pillars 3, 4 support the longitudinal member 7 at the Bessel points of the latter, i.e., the points that minimize the vertical deflection of the longitudinal member itself.

The pillar 5 supports the longitudinal member 8 in the middle of the latter.

The frame 6 is constrained to the pillars 3, 4, 5 by means of a statically determinate system of constraint.

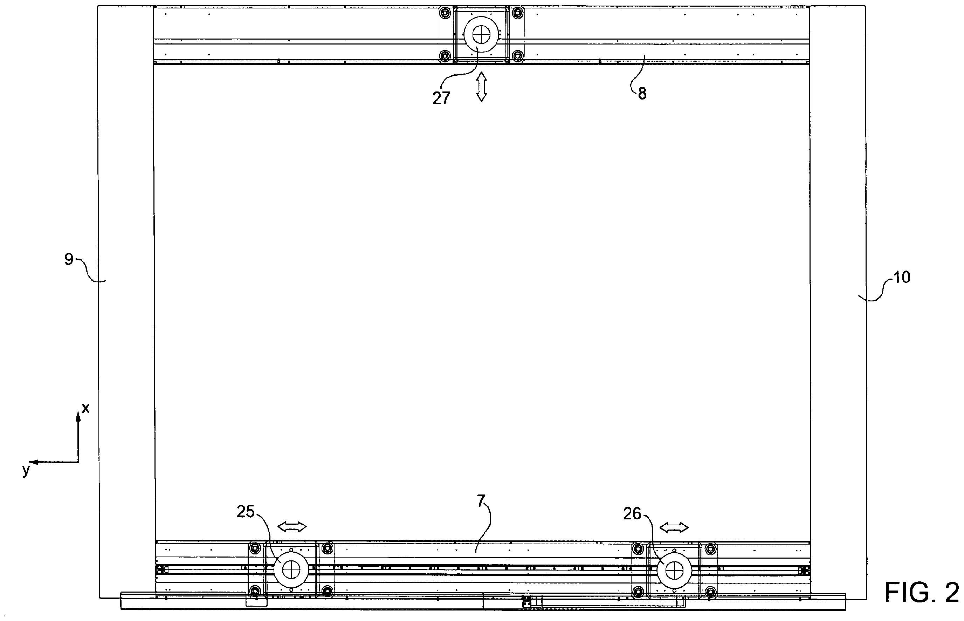

Figure 2 is a schematic illustration of a first embodiment of the aforesaid system of constraint, whereby the pillars 3, 4 are connected to the longitudinal member 7 via respective constraints 25, 26 that allow a degree of freedom of translation in the direction longitudinal with respect to the longitudinal member itself, i.e., parallel to the axis Y.

The pillar 5 is, instead, connected to the longitudinal member 8 via a constraint 27 that allows a degree of freedom of translation in the direction transverse with respect to the longitudinal member itself, i.e., parallel to the axis X.

The degrees of freedom of translation and rotation in the plane X, Y are thus eliminated.

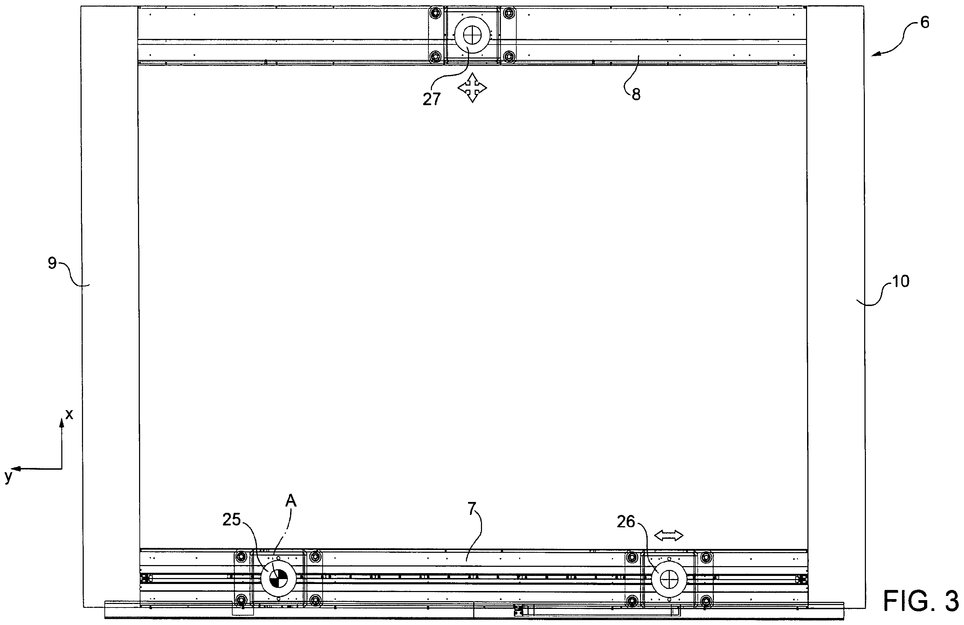

Figure 3 illustrates a variant embodiment of the system of constraint, in which the constraint 25 is constituted by a hinge with a vertical axis A, which enables relative rotation in the plane X, Y but prevents relative translations along each axis of the triad; the constraint 26 is configured so as to allow a degree of freedom of translation in a direction parallel to the axis Y and intersecting the axis A; the constraint 27 is constituted by a simple rest that enables relative translations along both of the axes X, Y and that constitutes a constraint along the axis Z.

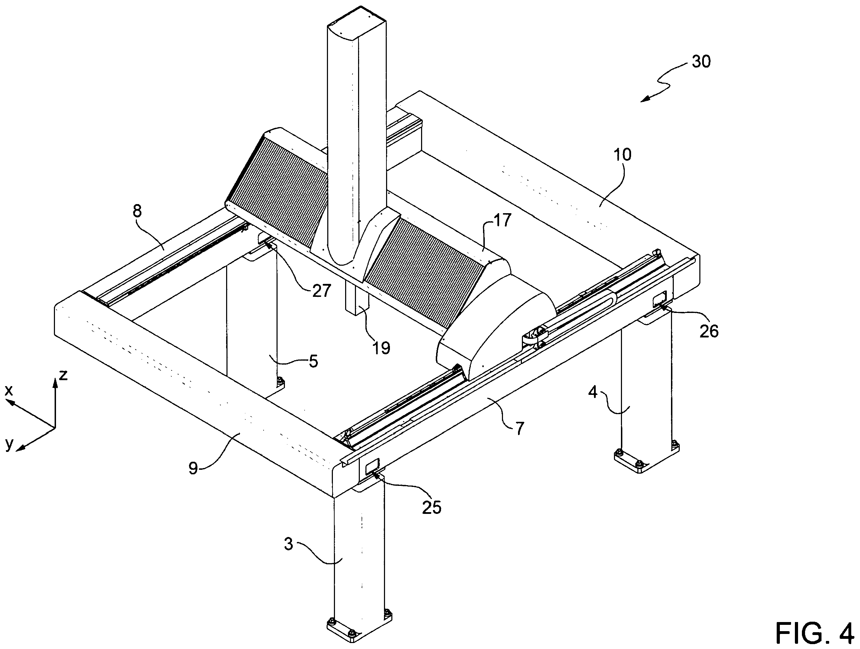

Figure 4 illustrates a second embodiment of the invention, designated as a whole by 30, which differs from the machine 1 described in that the pillars 3, 4 are constrained to the longitudinal member 7 at the ends of the latter, instead of at the Bessel points.

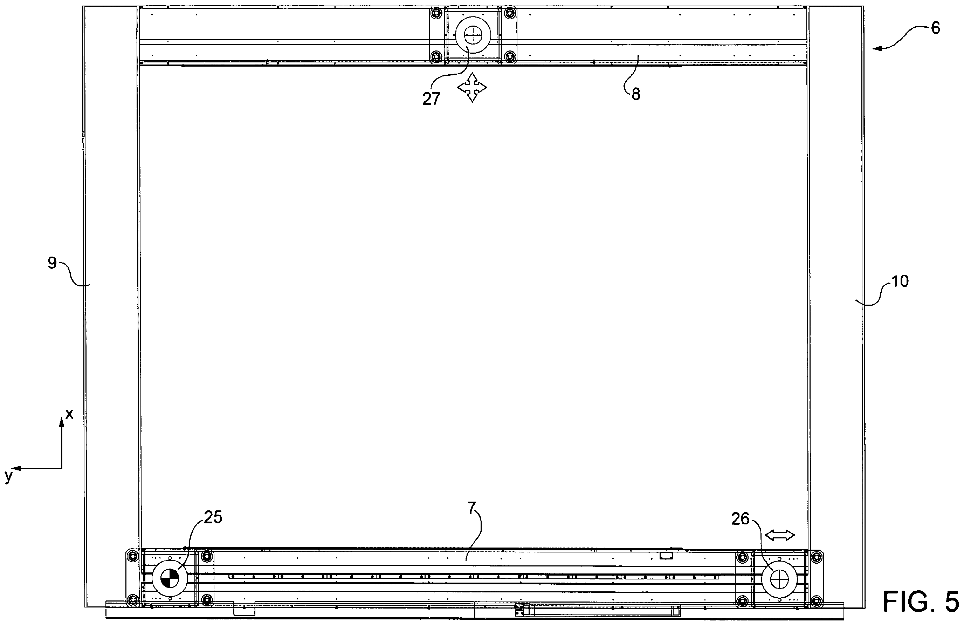

The system of constraint of the pillars 3, 4, 5 to the longitudinal members 7, 8 (Figure 5) is similar to the one described with reference to Figure 3.

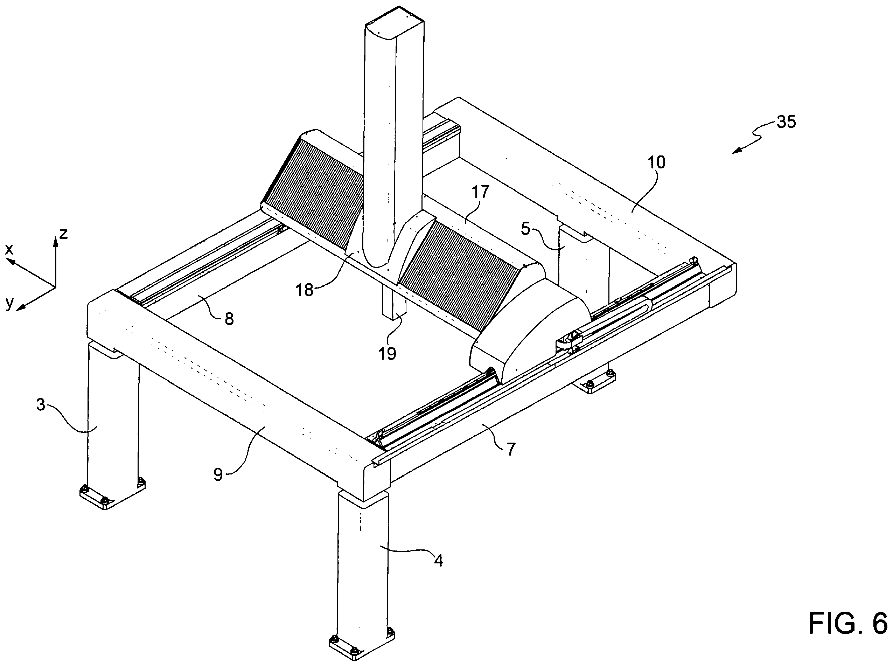

Figure 6 illustrates a machine 35 according to a third embodiment of the present invention.

In the machine 35 the pillars 3, 4, 5 are constrained to the cross members 9, 10 instead of to the longitudinal members 7, 8.

In particular, the pillars 3, 4 are constrained to the ends of the cross member 9 by means of respective constraints 25, 26, whilst the pillar 5 is constrained to the midpoint of the cross member 10 by means of the constraint 27.

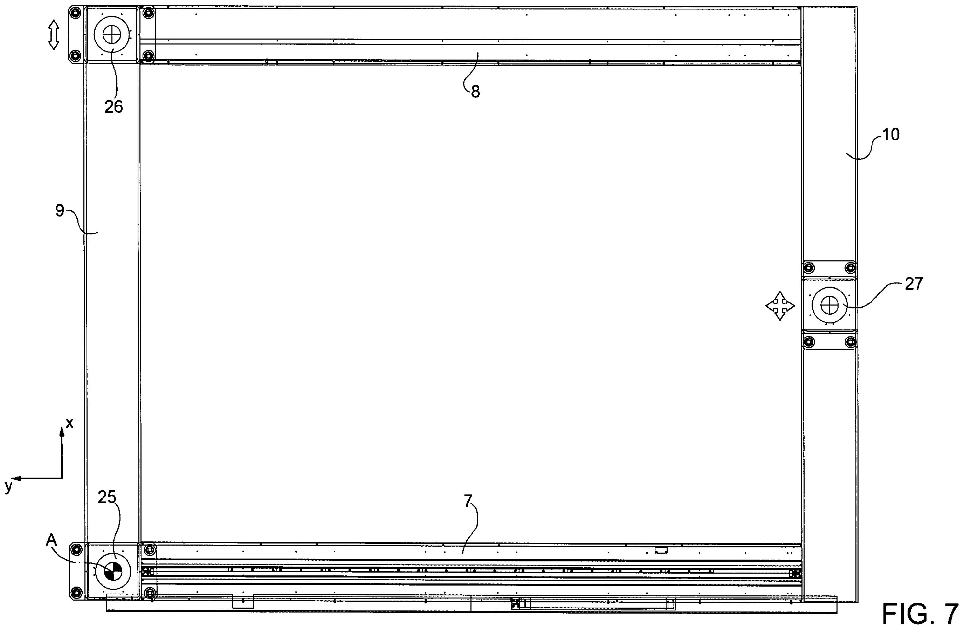

Figure 7 illustrates the scheme of constraint, which is also similar, *mutatis mutandis,* to that of Figure 3.

In particular, the constraint 25 is constituted by a hinge with a vertical axis A, which enables relative rotation in the plane X, Y but prevents relative translations along each of the axes X, Y, Z; the constraint 26 is configured so as to allow a degree of freedom of translation in a direction parallel to the axis X and intersecting the axis A; the constraint 27 is constituted by a simple rest that enables relative translations along both of the axes X, Y but not along the axis Z.

From an examination of the characteristics of the machines 1, 30, 35 provided according to the present invention the advantages that they afford are evident.

In particular, the fact that the longitudinal members 7, 8 are connected by the cross members 9, 10 so as to form therewith a frame 6 constrained in a statically determinate way to the pillars 3, 4, 5 causes the deformations of the frame itself to be uncoupled from those of the pillars. In other words, the frame 6 forms a rigid system that responds to deformations and relative displacements of the pillars induced by the foundation without undergoing deformation, but simply with roto-translations that can be easily compensated.

Finally, it is clear that modifications and variations may be made to the machines 1, 30, 35, without thereby departing from the sphere of protection defined by the claims.

In particular, the cross members 9, 10 could be constrained to the longitudinal members not at the ends, but at a certain distance therefrom, and might not be parallel to one another.

## Claims

1. A co-ordinate gantry measuring machine for measuring pieces of large dimensions such as, for example, parts of aeroplanes,
the co-ordinate gantry measuring machine having a fixed structure (2) comprising a plurality of pillars (3, 4 , 5) designed to be fixed to a foundation (21), a machine bed, or an industrial floor with pre-defined characteristics, and a pair of horizontal longitudinal members (7, 8) parallel to one another, supported by said pillars (3, 4, 5) and provided with guides (15, 16), and a mobile unit comprising a carriage (17) extending in a direction transverse to the horizontal longitudinal members (7,8), supported by the longitudinal members (7, 8) and mobile along said guides (15, 16), said machine being **characterized in that** said longitudinal members (7, 8) are connected together by a pair of cross members (9, 10) to form a frame (6), **in that** the pillars (3, 4, 5) are three in number, and **in that** the frame (6) is supported by the three pillars (3, 4, 5) via a statically determinate system of constraints (25, 26, 27).

2. The machine according to Claim 1, **characterized in that** the cross members (9, 10) are connected to the ends of the longitudinal members (7, 8) so as to form a rectangular frame (6) therewith.

3. The machine according to Claim 1 or Claim 2, **characterized in that** two (3, 4) of said pillars (3, 4, 5) are constrained to a first (7) of said longitudinal members (7, 8), and **in that** a third pillar (5) is constrained to a second (8) of said longitudinal members (7, 8).

4. The machine according to Claim 3, **characterized in that** said two pillars (3, 4) are constrained to the ends of the first longitudinal member (7).

5. The machine according to Claim 3, **characterized in that** said two pillars (3, 4) are constrained to the first longitudinal member (7) at the Bessel points thereof.

6. The machine according to any one of Claims 3 to 5, **characterized in that** said third pillar (5) is constrained to the second longitudinal member (8) in the middle of the latter.

7. The machine according to any one of the preceding claims, **characterized in that** said statically determinate system of constraint comprises a hinge (25) having a vertical axis (A), a constraint (26) configured so as to allow a degree of freedom of translation in a horizontal direction intersecting the axis of the hinge (25) and a simple rest (27).

8. The machine according to any one of Claims 1 to 6, **characterized in that** said statically determinate system of constraint comprises two constraints (25, 26) set between the respective said two pillars and said first longitudinal member (7) and configured so as to allow a degree of freedom of translation in a direction parallel to the longitudinal members (7, 8), and a third constraint (27) set between the third pillar (5) and the second longitudinal member (8) and configured so as to allow a degree of freedom of translation in a direction perpendicular to the longitudinal members (7, 8) .

9. The machine according to Claim 1 or Claim 2, **characterized in that** two of said pillars (3, 4) are constrained to a first (9) of said cross members (9, 10), and **in that** a third pillar (5) supports a second (10) of said cross members (9, 10).

10. The machine according to Claim 9, **characterized in that** said two pillars (3, 4) are constrained to the ends of the first cross member (9).

11. The machine according to Claim 9 or Claim 10, **characterized in that** said third pillar (5) is constrained to the second cross member (10) in the middle of the latter.

12. The machine according to any one of Claims 9 to 11, **characterized in that** said statically determinate system of constraint comprises a hinge (25) having a vertical axis (A), a constraint (26) configured so as to allow a degree of freedom of translation in a direction intersecting the axis (A) of the hinge (25), and a simple rest (27).

13. The machine according to any one of Claims 9 to 11, **characterized in that** said statically determinate system of constraint comprises two constraints (25, 26) set between the respective said two pillars (3, 4) and said first cross member (9) and configured so as to allow a degree of freedom of translation in a direction parallel to the cross members (9, 10), and a third constraint (27) set between the third pillar (5) and the second cross member (10) and configured so as to allow a degree of freedom of translation in a direction perpendicular to the cross members (9, 10).

## Patentansprüche

1. Portal-Koordinatenmessmaschine zum Messen von Teilen mit großen Abmessungen wie z.B. Flugzeugteilen, wobei die Portal-Koordinatenmessmaschine Folgendes aufweist: eine feststehende Struktur (2), umfassend eine Vielzahl von Säulen (3, 4, 5), die dafür bestimmt sind, an einem Fundament (21), einem Maschinenbett oder einem Industrieboden mit vordefinierten Merkmalen befestigt zu werden, und ein Paar von parallel zueinander angeordneten horizontalen Längselementen (7, 8), die durch die Säulen (3, 4, 5) getragen werden und mit Führungen (15, 16) versehen sind, und eine bewegliche Einheit, umfassend einen Schlitten (17), der sich in einer Richtung quer zu den horizontalen Längselementen (7, 8) erstreckt, durch die Längselemente (7, 8) getragen wird und entlang der Führungen (15, 16) beweglich ist, wobei die Maschine **dadurch gekennzeichnet ist, dass** die Längselemente (7, 8) durch ein Paar von Querelementen (9, 10) miteinander verbunden sind, um einen Rahmen (6) zu bilden, dass die Anzahl der Säulen (3, 4, 5) drei beträgt und dass der Rahmen (6) durch die drei Säulen (3, 4, 5) über ein statisch bestimmtes System von Anbindungen (25, 26, 27) getragen wird.

2. Maschine nach Anspruch 1, **dadurch gekennzeichnet, dass** die Querelemente (9, 10) derart mit den Enden der Längselemente (7, 8) verbunden sind, dass sie mit diesen einen rechteckigen Rahmen (6) bilden.

3. Maschine nach Anspruch 1 oder Anspruch 2, **dadurch gekennzeichnet, dass** zwei (3, 4) der Säulen (3, 4, 5) an ein erstes (7) der Längselemente (7, 8) angebunden sind und dass eine dritte Säule (5) an ein zweites (8) der Längselemente (7, 8) angebunden ist.

4. Maschine nach Anspruch 3, **dadurch gekennzeichnet, dass** die zwei Säulen (3, 4) an die Enden des ersten Längselements (7) angebunden sind.

5. Maschine nach Anspruch 3, **dadurch gekennzeichnet, dass** die zwei Säulen (3, 4) an das erste Längselement (7) an dessen Bessel-Punkten angebunden sind.

6. Maschine nach einem der Ansprüche 3 bis 5, **dadurch gekennzeichnet, dass** die dritte Säule (5) an das zweite Längselement (8) in der Mitte des Letztgenannten angebunden ist.

7. Maschine nach einem der vorhergehenden Ansprüche, **dadurch gekennzeichnet, dass** das statisch bestimmte Anbindungssystem Folgendes umfasst: ein Gelenk (25), das eine vertikale Achse (A) aufweist, eine Anbindung (26), die dafür ausgelegt ist, einen Translationsfreiheitsgrad in einer horizontalen Richtung zu erlauben, welche die Achse des Gelenks (25) schneidet, und eine einfache Auflage (27).

8. Maschine nach einem der Ansprüche 1 bis 6, **dadurch gekennzeichnet, dass** das statisch bestimmte Anbindungssystem Folgendes umfasst: zwei Anbindungen (25, 26), die jeweils zwischen den zwei Säulen und dem ersten Längselement (7) angeordnet sind und dafür ausgelegt sind, einen Translationsfreiheitsgrad in einer Richtung parallel zu den Längselementen (7, 8) zu erlauben, und eine dritte Anbindung (27), die zwischen der dritten Säule (5) und dem zweiten Längselement (8) angeordnet ist und dafür ausgelegt ist, einen Translationsfreiheitsgrad in einer Richtung senkrecht zu den Längselementen (7, 8) zu erlauben.

9. Maschine nach Anspruch 1 oder Anspruch 2, **dadurch gekennzeichnet, dass** zwei der Säulen (3, 4) an ein erstes (9) der Querelemente (9, 10) angebunden sind und dass eine dritte Säule (5) ein zweites (10) der Querelemente (9, 10) trägt.

10. Maschine nach Anspruch 9, **dadurch gekennzeichnet, dass** die zwei Säulen (3, 4) an die Enden des ersten Querelements (9) angebunden sind.

11. Maschine nach Anspruch 9 oder Anspruch 10, **dadurch gekennzeichnet, dass** die dritte Säule (5) an das zweite Querelement (10) in der Mitte des Letztgenannten angebunden ist.

12. Maschine nach einem der Ansprüche 9 bis 11, **dadurch gekennzeichnet, dass** das statisch bestimmte Anbindungssystem Folgendes umfasst: ein Gelenk (25), das eine vertikale Achse (A) aufweist, eine Anbindung (26), die dafür ausgelegt ist, einen Translationsfreiheitsgrad in einer Richtung zu erlauben, welche die Achse (A) des Gelenks (25) schneidet, und eine einfache Auflage (27).

13. Maschine nach einem der Ansprüche 9 bis 11, **dadurch gekennzeichnet, dass** das statisch bestimmte Anbindungssystem Folgendes umfasst: zwei Anbindungen (25, 26), die jeweils zwischen den zwei Säulen (3, 4) und dem ersten Querelement (9) angeordnet sind und dafür ausgelegt sind, einen Translationsfreiheitsgrad in einer Richtung parallel zu den Querelementen (9, 10) zu erlauben, und eine dritte Anbindung (27), die zwischen der dritten Säule (5) und dem zweiten Querelement (10) angeordnet ist und dafür ausgelegt ist, einen Translationsfreiheitsgrad in einer Richtung senkrecht zu den Querelementen (9, 10) zu erlauben.

## Revendications

1. Machine de mesure de coordonnées à portique pour mesurer des pièces de grandes dimensions telles que, par exemple, des parties d'aéronefs,
la machine de mesure de coordonnées à portique ayant une structure fixe (2) comprenant une pluralité de piliers (3, 4, 5) conçus pour être fixés sur une fondation (21), un banc de machine ou un sol industriel avec des caractéristiques prédéfinies, et une paire d'éléments longitudinaux horizontaux (7, 8) parallèles entre eux, supportés par lesdits piliers (3, 4, 5) et munis de guides (15, 16), et une unité mobile comprenant un chariot (17) s'étendant dans une direction transversale aux éléments horizontaux longitudinaux (7,8), supporté par les éléments longitudinaux (7, 8) et mobile le long desdits guides (15, 16), ladite machine étant **caractérisée en ce que** lesdits éléments longitudinaux (7, 8) sont reliés entre eux par une paire de traverses (9, 10) pour former un cadre (6), **en ce que** les piliers (3, 4, 5) sont au nombre de trois, et **en ce que** le cadre (6) est supporté par les trois piliers (3, 4, 5) via un système de contraintes déterminé statiquement (25, 26, 27).

2. Machine selon la revendication 1, **caractérisée en ce que** les traverses (9, 10) sont reliées aux extrémités des éléments longitudinaux (7, 8) de manière à former un cadre rectangulaire (6) avec ceux-ci.

3. Machine selon la revendication 1 ou la revendication 2, **caractérisée en ce que** deux (3, 4) desdits piliers (3, 4, 5) sont contraints à un premier (7) desdits éléments longitudinaux (7, 8), et **en ce qu'**un troisième pilier (5) est contraint à un second (8) desdits éléments longitudinaux (7, 8).

4. Machine selon la revendication 3, **caractérisée en ce que** lesdits deux piliers (3, 4) sont contraints aux extrémités du premier élément longitudinal (7).

5. Machine selon la revendication 3, **caractérisée en ce que** lesdits deux piliers (3, 4) sont contraints au premier élément longitudinal (7) au niveau des points de Bessel de celui-ci.

6. Machine selon l'une quelconque des revendications 3 à 5, **caractérisée en ce que** ledit troisième pilier (5) est contraint au second élément longitudinal (8) au milieu de ce dernier.

7. Machine selon l'une quelconque des revendications précédentes, **caractérisée en ce que** ledit système de contraintes déterminé statiquement comprend une charnière (25) ayant un axe vertical (A), une contrainte (26) configurée pour permettre un degré de liberté de déplacement en translation dans une direction horizontale recoupant l'axe de la charnière (25) et un appui simple (27) .

8. Machine selon l'une quelconque des revendications 1 à 6, **caractérisée en ce que** ledit système de contraintes déterminé statiquement comprend deux contraintes (25, 26) établies entre lesdits deux piliers respectifs et ledit premier élément longitudinal (7) et configurées de manière à permettre un degré de liberté de déplacement en translation dans une direction parallèle aux éléments longitudinaux (7, 8), et une troisième contrainte (27) établie entre le troisième pilier (5) et le second élément longitudinal (8) et configurée de manière à permettre un degré de liberté de déplacement en translation dans une direction perpendiculaire aux éléments longitudinaux (7, 8).

9. Machine selon la revendication 1 ou la revendication 2, **caractérisée en ce que** deux desdits piliers (3, 4) sont contraints à une première (9) desdites traverses (9, 10), et **en ce qu'**un troisième pilier (5) supporte une seconde (10) desdites traverses (9, 10).

10. Machine selon la revendication 9, **caractérisée en ce que** lesdits deux piliers (3, 4) sont contraints aux extrémités de la première traverse (9).

11. Machine selon la revendication 9 ou la revendication 10, **caractérisée en ce que** ledit troisième pilier (5) est contraint à la seconde traverse (10) au milieu de cette dernière.

12. Machine selon l'une quelconque des revendications 9 à 11, **caractérisée en ce que** ledit système de contraintes déterminé statiquement comprend une charnière (25) ayant un axe vertical (A), une contrainte (26) configurée pour permettre un degré de liberté de déplacement en translation dans une direction recoupant l'axe (A) de la charnière (25), et un appui simple (27).

13. Machine selon l'une quelconque des revendications 9 à 11, **caractérisée en ce que** ledit système de contraintes déterminé statiquement comprend deux contraintes (25, 26) établies entre lesdits deux piliers (3, 4) respectifs et ladite première traverse (9) et configurées de manière à réduire un degré de liberté de déplacement en translation dans une direction parallèle aux traverses (9, 10), et une troisième contrainte (27) établie entre le troisième pilier (5) et la seconde traverse (10) et configurée de manière à permettre un degré de liberté de déplacement en translation dans une direction perpendiculaire aux traverses (9, 10).
